(19)

Europäisches
Patentamt
European
Patent Office
Office européen
des brevets

(11)  **EP 2 645 652 A1**

(12)  **EUROPEAN PATENT APPLICATION**

(43) Date of publication:
**02.10.2013  Bulletin 2013/40**

(51) Int Cl.:
*H04L 25/03* *(2006.01)*

(21) Application number: **12162389.6**

(22) Date of filing: **30.03.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **IMEC
3001 Leuven (BE)**

(72) Inventor: **Bourdoux, André
3001 Leuven (BE)**

(74) Representative: **Van Bladel, Marc
DenK iP bvba
Hundelgemsesteenweg 1114
9820 Merelbeke (BE)**

(54)  **Receiver architecture for block transmission with known symbol padding**

(57)     A circuit is presented for frequency domain
equalization of a received block (10) of symbols, said
received block comprising a header with known symbols
and a body. The circuit comprises
- a filtering section (1) arranged for equalizing a frequency
domain representation of the received block based on
an estimated channel frequency response and arranged
for converting the equalized received block to the time
domain, said equalized received block comprising an
equalized header with known symbols and an equalized
body,
- a slicer (2) arranged for slicing a block of symbols corresponding to the equalized body and for outputting a
block of sliced symbols,
- an updating section (3) comprising means for determining a header error indicative of the difference (11) be-
tween the header with known signals and the equalized
header, means for determining a body error indicative of
the difference (12) between the symbols at the slicer input
and the sliced symbols at the slicer output, and means
for computing an updated estimated channel frequency
response with a frequency domain error signal (13) de-
rived from the header error and the body error.

Fig.5

EP 2 645 652 A1

**Description**

**Field of the invention**

The present invention is related to the field of receiver structures for digital communication systems wherein block transmission is applied as well as known signal padding.

**Background of the invention**

Various digital communication systems exist wherein several operational modes have to be available. One notable example is the Chinese standard for a 'Digital Television Terrestrial Broadcasting System' (DTTB), also often referred to as Digital Terrestrial Multimedia Broadcast (DTMB). It has a complex physical layer definition with many different modes including different block transmission schemes (such as orthogonal frequency-division multiplexing (OFDM) and single carrier (SC)) and three different known symbol padding cyclic extensions (PN sequences), some of which may have phase rotation between blocks (thus breaking the cyclicity), three FEC coding rates, five constellation mappings, two interleaver depths. The block sizes with or without cyclic extension are cumbersome 'non-power of two' numbers. This results in hundreds of operational modes to support standard and high definition TV terrestrial broadcasting services, with rates up to 32.486 Mbps in a channel bandwidth of 7.56 MHz.

The key differentiating technical feature of the Chinese DTMB system with respect to the European Digital Video Broadcasting- Terrestrial (DVB- T) standard is that DTMB adopts known symbol padding (KSP) as the cyclic extension for both SC block transmission and OFDM. In case OFDM is applied, this scheme is referred to in the DTMB literature as Time Domain Synchronous OFDM (TDS- OFDM), as opposed to the more conventional cyclic- prefix OFDM (CP- OFDM) .

A high performance receiver for DTMB is of importance for two reasons. From a more industrial point of view, TV and TV chipset manufacturers nowadays want to build multi-standard products that can be sold all over the world, thus supporting all digital broadcasting standards, including the Chinese one. Further, it is a challenging task to design a receiver signal processing architecture, because the frame structure does not contain any preamble and the channel estimation can only be based on the embedded cyclic extensions that are corrupted by the preceding data part in long multipath environment. Hence, excellent performance and low complexity are not easily achieved.

The present invention deals with channel estimation and equalization for all modes of DTMB. There is not an abundant literature on this topic. In general, most papers focus on either SC or OFDM, rarely on both. Also, most techniques in the literature are only valid for a subset of the possible cyclic extensions. Some authors have proposed to turn the received OFDM frame into a zero-padded signal and to compensate the poor time-domain channel estimation with a complex decision-feedback equalizer. A similar approach consists in employing improved channel estimation where 'bad' correlation peaks are compensated. A better and simpler channel estimation strategy is outlined in the paper ('Low Complexity Channel Estimation Method for TDS-OFDM Based Chinese DTTB System', L. Gui et al., IEEE Trans. Cons. Electr., vol. 55, no. 3, pp. 1135-1140, Aug. 2009) but it is only applicable to sequences with PN rotation. On the other hand, a channel estimation improvement has been described for the SC mode based on averaging and thresholding. This is clearly only valid for the Single Carrier mode with non-rotated sequences.

Although several techniques in the state of the art perform well, none of them supports all modes of DTMB. A complete solution would therefore require the juxtaposition of many DSP blocks, which results in a costly hardware implementation. Another drawback of most methods is that they transform the received frame into a zero-padded block. In this case, the received cyclic extension is not equalized and is less useful for adaptive processing and tracking.

As DTMB is an important application field of the present invention, a brief description of that system is now provided. Only the modulation, block transmission, cyclic extension and the pulse shaping are detailed.

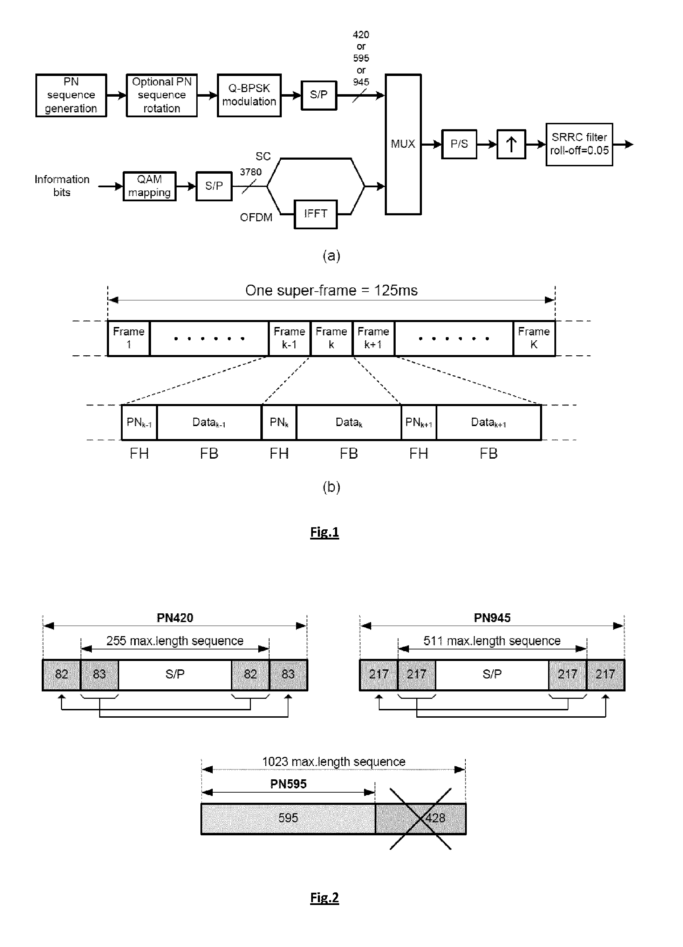

The DTMB frame generation is illustrated in Fig. 1(a). After encoding and interleaving, bits are mapped onto QAM constellations and inserted in frames. Each frame contains a frame header (FH) and a frame body (FB). The FB consists of exactly N=3780 data symbols whereas the FH consists of the known PN symbols. Both the FH and FB have the same symbol rate of 7.56MSymb/s. In the OFDM case, the FB is obtained from the inverse discrete Fourier transform (IDFT) of size 3780 of the data block. All sub-carriers are then loaded and their spacing is 2 kHz. Each FB lasts exactly $500\mu s$ (=3780x1/7.56$\mu$s). There are three different lengths for the FH: 420, 595 or 945 symbols. According to the length of the FH, there will be exactly 225, 216 or 200 frames fitting in a super-frame of 125ms (Fig. 1(b)). Thanks to the FH that takes the role of a block cyclic extension, frequency domain equalization is possible both for SC and OFDM.

The frame is upsampled and filtered with a square root raised cosine (SRRC) filter with a roll-off factor of 5%. This shapes the transmitted spectrum and limits the bandwidth of the transmitted signal to 8 MHz.

The FH contains one out of three possible PN sequences of length 420, 595 or 945 (in short PN420, PN595 and PN945), respectively. The design of the PN sequences is illustrated in Fig. 2. The PN420 sequence is obtained by expanding a maximum length sequence (m- sequence) of length 255 with a prefix and a postfix. This design results in auto-correlation sidelobe levels of-1 over a limited range (82+83=165 samples) when correlated with the mother m-sequence of size 255. The PN945 sequence is similarly designed from an m-sequence of size 511 and pre- and post-fixes of size 217, resulting in a good autocorrelation region of size 217+217=434. Additionally, when the so-called PN rotation is applied, the mother m-sequence of the PN420 or PN945 is cyclically rotated by a different amount for every frame, so that the resulting PN420 or PN945 has a unique value within a super-frame. This, however, results in a block transmission that is not cyclic anymore and will need a special treatment for frequency domain processing. When used, the PN420 or PN945 are boosted by 3dB with respect to the FB.

The PN595 sequence is constructed differently. It is obtained by truncation of a length 1023 m-sequence to a length 595. Hence, this sequence has bad auto-correlation properties. The PN595 sequence is never rotated nor is it boosted by 3dB.

The FH is modulated by Quadrature BPSK, which simply means that the same value is mapped on the I and Q axes.

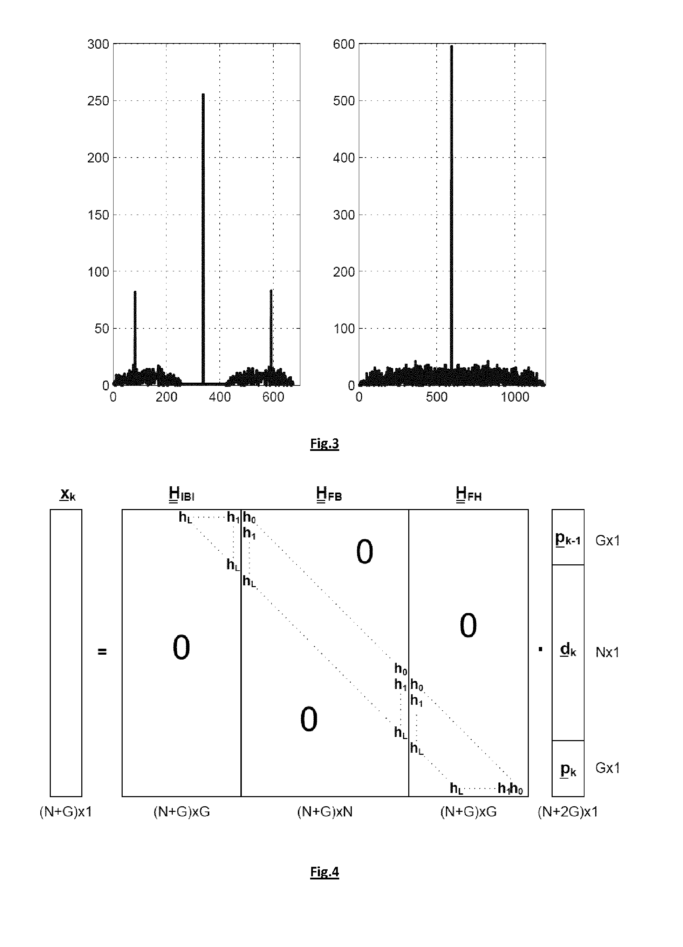

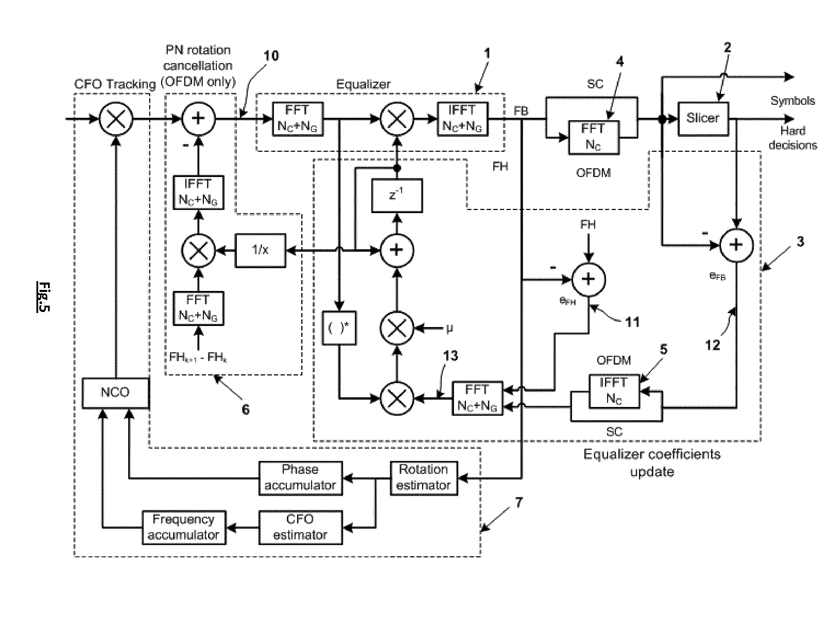

The PN420 and PN945 sequences have similar correlation properties because they are designed in the same way. If one of those sequences is correlated against its mother m-sequence, it exhibits a zone of low correlation sidelobes (-1) around the main peak (corresponding to the prefix and postfix) but it will also exhibit some unwanted "noise like" correlation sidelobes beyond that zone and two unwanted smaller peaks. Fig. 3 (left) illustrates this. As for the PN595, because it is a truncated m-sequence, it has everywhere unwanted "noise like" correlation sidelobes as is visible in Fig. 3 (right).

Hence, there is a need for a signal processing scheme that can deal with the various flavours of systems wherein block transmission is applied along with known symbol padding, as encountered more in particular in the DTMB system.

**Summary of the invention**

It is an object of embodiments of the present invention to provide for an equalizer circuit that is suitable for use in a unified receiver architecture capable of processing various operational modes of a digital communication system. A main application of the proposed solution relates to the Chinese standard for digital terrestrial television.

The above objective is accomplished by an equalizer structure as in claim 1 and a receiver structure comprising such an equalizer structure.

More in particular, in a first aspect this invention relates to a circuit for frequency domain equalization of a received block of symbols, said received block comprising a header with known symbols and a body. The circuit comprises

- a filtering section arranged for equalizing a frequency domain representation of the received block based on an estimated channel frequency response and arranged for converting the equalized received block to the time domain, said equalized received block comprising an equalized header with known symbols and an equalized body,
- a slicer arranged for slicing a block of symbols corresponding to the equalized body and for outputting a block of sliced symbols,
- an updating section comprising means for determining an header error indicative of the difference between the header with known signals and the equalized header, means for determining a body error indicative of the difference between the symbols at the slicer input and the sliced symbols at the slicer output, and means for computing an updated estimated channel frequency response with a frequency domain error signal derived from the header error and the body error.

The proposed equalizer circuit is highly beneficial for processing a received block of symbols that comprises a header with known symbols and a body. Irrespective of the modulation scheme (e.g. single carrier or OFDM) transmitted blocks of symbols are processed which have a header containing known symbols. This is one of the design options, which allow for a data-aided and decision-directed approach. According to the invention both the header (i.e. the cyclic extension of the body) and the body are still available after equalization. Both are exploited when determining an updated estimation of the frequency channel response. Due to the fact that also the equalized header is available for adaptive processing, a good performance can be achieved.

In an advantageous embodiment the circuit comprises conversion means for converting the time-domain converted equalized body to the frequency domain, thereby obtaining the block of symbols at the input of the slicer and for converting the body error. The conversion means are provided in one of two parallel possible signal paths, whereby the path with the conversion means is for the OFDM processing and the other, parallel path is a simple through-connection, which is used in case single carrier modulation is applied.

The updating section is preferably arranged for performing the equalization according to a recursive least-squares (RLS) algorithm. In alternative embodiments, the least mean squares adaptation rule can be used. In fact, any other adaptation rule can be used.

In a typical embodiment the header with known symbols is a Pseudo-Noise, PN, sequence.

For initially estimating the channel a correlation-based approach is preferably adopted. The PN sequence received in the header is thereby correlated with the known PN sequence which was transmitted. In alternative embodiments maximum likelihood estimation can be applied, although that involves more complexity than a correlation. It is an asset of the proposed solution that even with such a simple initial correlation-based channel estimation, which may yield a poor result, it is still possible to obtain a good performance due to the adaptive equalization.

In a preferred embodiment the received block of symbols comprises an Orthogonal Frequency Division Multiplexing signal or wherein the received block of symbols is a single-carrier modulated block.

In another aspect the invention relates to a receiver structure comprising a circuit for frequency domain equalization as previously described.

In a preferred embodiment the receiver structure further comprises a circuit for cancelling a rotation applied to a PN sequence in the header at the transmitter side. The circuit for cancelling the rotation is advantageously arranged for taking into account said channel estimation.

In another preferred embodiment the receiver structure further comprises a tracking circuit adapted for compensating unwanted signal rotation due to carrier frequency offset, whereby the tracking circuit is arranged for being fed with said equalized header.

Preferably, the receiver structure is adapted for operating according to the digital television terrestrial broadcasting system standard GB20600- 2006. One of the most important benefits of the proposed solution is that it can deal with all possible operational modes of said standard.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.


**Brief description of the drawings**

The invention will now be described further, by way of example, with reference to the accompanying drawings, in which:

Fig.1 represents the DTMB frame generation (a) and super-frame construction (b).

Fig.2 represents the construction of PN sequences.

Fig.3 represents the autocorrelation of the PN420 (left) and PN595 (right) sequences, respectively.

Fig.4 illustrates the vectors and matrices of the applied matrix model.

Fig.5 represents the global signal processing architecture according to the present invention.

Fig.6 illustrates EVM in SC mode with PN595 in the Brazil A channel.

Fig.7 illustrates EVM in OFDM mode with PN420 in the Brazil A channel.

Fig.8 illustrates the channel estimation MSE in SC mode with PN595 in the Brazil A channel.

Fig.9 illustrates EVM in SC mode with PN595 in the ATSC R22 Ensemble 3 channel.

Fig.10 illustrates channel estimation in SC mode with PN595 in the ATSC R22 Ensemble 3 channel.

Fig.11 illustrates channel estimation in OFDM mode with PN420 in the ATSC R22 Ensemble 3 channel.

Fig.12 illustrates EVM in SC mode with PN595 in the Brazil A channel, with CFO and SCO equal to 0.1ppm.


**Detailed description of illustrative embodiments**

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

Regarding notational conventions, normal Latin characters are used for time-domain signals (a) and tilde characters for frequency-domain signals ($\tilde{\alpha}$). Vectors and matrices are denoted by a single and double under-bar ($\underline{\alpha}$ and $\underline{\underline{A}}$), respectively. For vectors, $\alpha(n:m)$ is used to represent a portion of $\alpha$ from index n to m and $\alpha(n)$ is the nth entry of $\alpha$. The superscript $*$ is used to indicate the complex conjugate ($\alpha^*$). The superscripts $T$ and $H$ denote the matrix transpose and complex conjugate transpose, respectively, ($\underline{\underline{A}}^T$ and $\underline{\underline{A}}^H$); $\underline{\underline{F}}_N$ denotes a normalized Fourier matrix of size N such that trace ($\underline{\underline{F}}_N \underline{\underline{F}}_N^H$) = N.

Transmission of a sequence of symbols s (n) is assumed over a static multipath channel with additive white Gaussian noise. The channel order is L, hence the channel impulse response $h$ ($l$) is non-zero for $0 \leq l \leq L$. The received signal $x$ ($n$) is given by the convolution of the sequence with the channel.

$$x(n) = \sum_{l=0}^{L} h(l)s(n-l) + \eta(n) \tag{1}$$

where $\eta$ ($n$) are the complex white Gaussian noise samples of variance $\sigma^2_n$. In block transmission, the symbols are organized in data blocks of size N. The kth block is given by the vector $\underline{d}k = [dk\,(0) \ ... \ dk\,(N-1)\,]^T$. The blocks receive a cyclic extension $\underline{p}_k = [p_k\,(0) \ ... \ p_k\,(G-1)\,]^T$ of length G so that the total transmitted block is given by $\underline{s}_k = [\underline{d}^T_k\,\underline{p}^T_k]^T$, which has size M = N + G. The only difference between SC and OFDM is that, in the OFDM case, $\underline{d}_k$ is obtained from the symbol vector defined in the frequency domain $\underline{\tilde{d}}_k$:

$$\underline{d}_k = \underline{\underline{F}}_N^H \cdot \underline{\tilde{d}}_k \tag{2}$$

Assuming that the cyclic extension length G is larger than the channel order L, the received signal depends on the previous cyclic extension $\underline{p}_{k-1}$, the current data $\underline{d}_k$ and current cyclic extension $\underline{p}_k$. Neglecting the noise, it takes the following form :

$$x_k = \underline{\underline{H}}_{FB} \cdot \underline{d}_k + \underline{\underline{H}}_{FH} \cdot \underline{p}_k + \underline{\underline{H}}_{IBI} \cdot \underline{p}_{k-1} \qquad (3)$$

where the channel convolution matrices are defined as follows: $\underline{\underline{H}}_{FB}$ is an M × N Toeplitz matrix with [$h$ (0) ... $h$ (L- 1), 0 ... 0] on the first column, $\underline{\underline{H}}_{FH}$ is an M × G lower triangular Toeplitz matrix with [0 .... 0, $h$ (L- 1) ... $h$ (0) ] on the last row and $\underline{H}_{IBI}$ is an M xG upper triangular Toeplitz matrix with [0 ... 0, $h$ (L- 1) ... $h$ (1) ] on the first row. Those channel matrices and the vectors from (3) are illustrated in Fig. 4.

For simple equalization in the frequency domain, the channel matrix must be made circulant, as circulant matrices have the property to be diagonalized by Fourier matrices. In that case, equalization in the FD is simply a complex multiplication per sub-carrier. Given the received signal (3) and assuming that the channel is known (or estimated), there are two possible approaches to make the channel matrix circulant, namely the ZP receiver or the KSP receiver.

In the ZP receiver approach both the effect of $\underline{p}_k$ and $\underline{p}_{k-1}$ must be removed from $\underline{x}_k$, since the signal was not transmitted as a ZP block transmission. This is achieved by computing $\underline{x}^{ZP}_k$ as: In the ZP receiver approach, since the signal was not transmitted as a ZP block transmission, both the effect of $\underline{p}_k$ and $\underline{p}_{k-1}$ must be removed from $\underline{x}_k$. This is achieved by computing $\underline{x}^{ZP}_k$ as:

$$x^{ZP}_k = \underline{x}_k - \underline{\underline{H}}_{FH} \cdot \underline{p}_k - \underline{\underline{H}}_{IBI} \cdot \underline{p}_{k-1} \qquad (4)$$

The N first samples of $\underline{x}^{ZP}_k$ are then transformed by a DFT of size N for FD equalization and the N × N circulant channel matrix is given by the N first rows of $\underline{\underline{H}}_{FB}$. In the OFDM case, where the FD block is of size N, the ZP approach is - at first sight - more attractive. Most articles in the DTMB literature follow this method for equalization. Note that, in the ZP approach, the cyclic extension cancels out in (4) and, hence, is not available after equalization. Therefore, the zero padding approach is not desirable.

In the KSP receiver approach applied in this invention, there are two cases. If $\underline{p}_k = \underline{p}_{k-1} = \underline{p}$ (i.e. without PN rotation), the transmission was a (cyclic) KSP transmission and the received signal is also equal to:

$$x^{KSP}_k = \underline{x}_k = [\underline{\underline{H}}_{FB} \mid \underline{\underline{H}}_{FH} + \underline{\underline{H}}_{IBI}] \cdot \left[ \begin{array}{c} \underline{d}_k \\ \underline{p} \end{array} \right] \qquad (5)$$

A circulant channel matrix of size M can be recognised in (5). If $\underline{p}_k \neq \underline{p}_{k-1}$, the KSP property can be restored by computing $\underline{x}^{KSP}_k$ as :

$$x^{KSP}_k = \underline{x}_k + \underline{\underline{H}}_{IBI} \cdot (\underline{p}_k - \underline{p}_{k-1}) \qquad (6)$$

In (5) and (6), $\underline{x}^{ZP}_k$ has length M and the circulant matrix has dimension M×M. A DFT of size M is used to transform to the FD for equalization. Note that, in the KSP approach, the cyclic extension is also equalized, which is of great value for adaptive equalization and tracking. Note, however, that the OFDM FD symbols are not directly available after equalization in the KSP approach because the DFT does not have the size N. It is to be noted that the conversions to KSP (6) (just as those to ZP (4)) are expressed in matrix form but they actually require convolutions of sequences of length G at most.

Taking into account the FH design and correlation properties as outlined above, several approaches can be followed to estimate the channel from the transmitted PN sequences. The main alternatives are : correlation-based estimation, least-squares (LS) estimation and its variants and maximum likelihood (ML) estimation :

- The correlation-based channel estimation simply consists in correlating the received PN with the ideal PN sequence. Obviously, given the auto-correlation properties of the PN sequences, the resulting channel estimate will be far from ideal.
- The LS (or one of its variants) estimation can provide excellent channel estimation accuracy. However, it involves computing the pseudo-inverse of very large matrices (which in some variants must be computed in real-time) and multiplication of the received FH with the computed pseudo-inverse, which, given the length of the PN sequences, has very large dimensions. Hence, it is not suitable for a realistic implementation.

- The ML estimation is also significantly complex. It can be approached by a correlation based approach followed by an iterative removal of the correlation sidelobes due to the few strongest estimated peaks. This approach is also significantly degraded due to the nature of the FH.

This analysis reveals that a realistic channel estimation (i.e. correlation-based or approximated ML) is far from ideal and that the subsequent equalization will be significantly degraded. The situation can be even worse when the channel length exceeds the length of the cyclic extension of the PN420 or PN945.

The above observations have led to the conception of a receiver architecture that can start from a poor initial channel estimation. An adaptive equalizer structure is chosen. Since the blocks are transmitted with a cyclic extension, frequency-domain adaptive equalization is preferred. To improve the adaptive equalizer performance a combination of data-aided and decision directed mode is applied. Hence, in the solution according to the invention a KSP receiver is applied. This is not the natural approach for OFDM, since it involves length M DFTs and IDFTs. However, it is key to achieve very good performance by exploiting the equalized FH for adaptive processing and tracking purposes.

The global signal processing architecture of the invention is illustrated in Fig. 5. The algorithm is described by equations (7) to (9) for the initialization and (10) to (22) for the adaptive equalization in SC mode. Equations (23) to (26) describe the equations that are specific to the OFDM mode. The tracking and PN rotation cancellation are described separately. Note that it is assumed that an acquisition block has performed timing acquisition and compensated for carrier frequency offset (CFO) and sampling clock offset (SCO) with an accuracy of 1 ppm.

### A. Equaliser Initialisation

The equalizer is initialized with the inverse of the size M DFT of the estimated channel response; in (7), $\hat{h}$ is appended with 0s to have length M, if needed.

$$\tilde{\hat{h}}_0 \;=\; \underline{\underline{F}}_M \cdot \underline{\hat{h}} \qquad (7)$$

$$\tilde{f}_0(m) \;=\; 1/\tilde{\hat{h}}_0(m) \qquad \text{for} \quad m = 0 \ldots M-1 \qquad (8)$$

$$\underline{\tilde{f}}_0 \;=\; [\tilde{f}_0(m) \;\ldots\; \tilde{f}_0(M-1)] \qquad (9)$$

### B. Operation in Single carrier mode

The kth received block is transformed by a size M DFT to the FD (10), equalized (11) and transformed back to time domain (TD) by a size M IDFT (12). This provides both the equalized FB (13) and equalized FH (14). The error on the data (or FB) is computed by computing the difference (16) between the equalized FB and its sliced value (15); $f\{\}$ denotes the slicing or hard decision operation in (15). The error on the FH can be directly computed as the difference (17) between the known FH and the equalized FH. The total TD error vector is the vertical concatenation of the FB error and FH error (18). The TD error vector is converted to the FD by a size M DFT (19). The equalizer update is achieved by (20) if a least mean square (LMS) algorithm is used or by (21) and (22) if a recursive least squares (RLS) algorithm is used. Other adaptive algorithms can of course be used. The algorithms described here are hybrid data-aided (DA) (17) and decision-directed (DD) (16). It is also possible to have the adaptive equalizer working only in data-aided mode. The switching between DA and hybrid DA-DD operation can be based on a signal-to-noise ratio (SNR) estimation e.g. on the equalized FH.

$$\underline{\tilde{x}}_k \;=\; \underline{\underline{F}}_M \cdot \underline{x}_k \qquad (10)$$

$$\underline{\tilde{y}}_k \;=\; \underline{\tilde{f}}_k \odot \underline{\tilde{x}}_k \qquad (11)$$

$$\underline{y}_k = \underline{\underline{F}}_M^H \cdot \underline{\tilde{y}}_k \qquad (12)$$

$$\underline{\hat{d}}_k = \underline{y}_k(0:N-1) \qquad (13)$$

$$\underline{\hat{p}}_k = \underline{y}_k(N:M-1) \qquad (14)$$

$$\underline{\bar{d}}_k = f\{\underline{\hat{d}}_k\} \qquad (15)$$

$$\underline{e}_{FB,k} = \underline{\bar{d}}_k - \underline{\hat{d}}_k \qquad (16)$$

$$\underline{e}_{FH,k} = \underline{p}_k - \underline{\hat{p}}_k \qquad (17)$$

$$\underline{e}_k = [\underline{e}_{FB,k}^T \quad \underline{e}_{FH,k}^T]^T \qquad (18)$$

$$\underline{\tilde{e}}_k = \underline{\underline{F}}_M \cdot \underline{e}_k \qquad (19)$$

$$\underline{\tilde{f}}_{k+1} = \underline{\tilde{f}}_k + 2\mu \, \underline{\tilde{x}}_k^* \odot \underline{\tilde{e}}_k \qquad (20)$$

$$\tilde{R}_{k+1}(m) = w\tilde{R}_k(m) + (1-w)|\tilde{R}_k(m)|^2 \qquad (21)$$

$$\underline{\tilde{f}}_{k+1}(m) = \underline{\tilde{f}}_k(m) + 0.5 \, \underline{\tilde{x}}_k^*(m)\underline{\tilde{e}}_k(m)\tilde{R}_k(m) \qquad (22)$$

C. Operation in OFDM mode

When OFDM is used, the equalized TD signal $y_k$ from (12) cannot be used directly because the data must be extracted in the FD. Hence, equations (13), (15), (16) and (18) must be replaced by equations (23) to (26). The TD signal $y_k$ must be transformed to the FD by a length N DFT (23). Then the slicing can be applied (24) and the FB error can be calculated (25) and converted back to TD (26).

$$\underline{\tilde{\hat{d}}}_k = \underline{\underline{F}}_N \cdot \underline{y}_k(0:N-1) \qquad (23)$$

$$\underline{\tilde{\bar{d}}}_k = f\{\underline{\tilde{\hat{d}}}_k\} \qquad (24)$$

$$\tilde{\underline{e}}_{FB,k} \quad = \quad \tilde{\bar{\underline{d}}}_k - \tilde{\hat{\bar{\underline{d}}}}_k \qquad (25)$$

$$\underline{e}_k \quad = \quad \left[\underline{F}_N^H \cdot \tilde{\underline{e}}_{FB,k} \quad \underline{e}_{FH,k}^T\right]^T \qquad (26)$$

D. PN rotation cancellation

The PN rotation cancellation is needed if the PN rotation of PN420 or PN945, as previously described, is applied. This is presumably only applied in OFDM mode but this is not a mandatory for the algorithm. The algorithm implements the compensation described in (6). In the proposed architecture, the convolution in (6), represented by $\underline{H}_{IBI} \cdot (\underline{p}_k - \underline{p}_{k-1})$ is computed in the FD. The estimated channel is readily achieved by taking the inverse of the FD equalizer coefficients :

$$\tilde{\hat{h}}_{k+1}(m) = 1/\tilde{f}_k(m) \qquad \text{for} \quad m = 0 \dots M - 1 \qquad (27)$$

and the TD compensation vector $\underline{c}_k$ is obtained from

$$\underline{c}_k = \underline{F}_M^H \cdot \left( \left(\underline{F}_M \cdot (\underline{p}_k - \underline{p}_{k-1})\right) \odot \tilde{\hat{\underline{h}}}_{k+1} \right) \qquad (28)$$

Note that it is possible to pre-compute the DFT of $(\underline{p}_k - \underline{p}_{k-1})$. After conversion to the TD, the suitable part of $\underline{c}_k$ must be used e.g. the $2G-1$ first samples that correspond to the convolution of $(\underline{p}_k - \underline{p}_{k-1})$ with the channel, of which the length is assumed to be shorter than G.

E. PN tracking

An important signal processing block is the tracking block. The equalized FH (14) can be used to estimate and compensate the unwanted rotation of the signal due to residual CFO and phase noise. Many tracking algorithms available in the literature can be used here. Due to the nature of the available reference signal (the FH) a TD tracking loop with a phase/frequency accumulator and a numerically controlled oscillator (NCO) is preferable.

An indication of the phase rotation $\phi(k)$ is simply obtained by evaluating the mean phase rotation of the received FH compared to the ideal FH :

$$\phi(k) = \angle(\underline{p}_k^H \cdot \hat{\underline{p}}_k) \qquad (29)$$

from which the estimated (unfiltered) CFO can be measured :

$$\hat{f}_{CFO}(k) = \frac{F_S \, \phi(k)}{2\pi(N + G)} \qquad (30)$$

Those values (29) or (30) are then fed to the CFO tracking loop.

To illustrate the benefits of the proposed scheme some numerical results are provided. The performance of the proposed architecture and algorithms has been evaluated by means of simulations. A PHY layer chain of the DTMB system has been implemented. The results presented here are without coding, as the focus is put on the channel estimation and (adaptive) equalization. The system parameters are detailed in Table I.

Table I

| Parameter | Value |
|---|---|
| Modulation | SC or OFDM |
| Frame header length | 420, 595 or 945 |
| PN rotation | Yes, on PN420 and PN945 |
| Symbol rate | 7.56 MHz |
| Pulse shaping | SRRC r = 0.05 |
| Modulation | 16-QAM |
| Number of frames | approx. 250 |
| Channel type | Brazil A or ATSC R22-Ensemble3 |

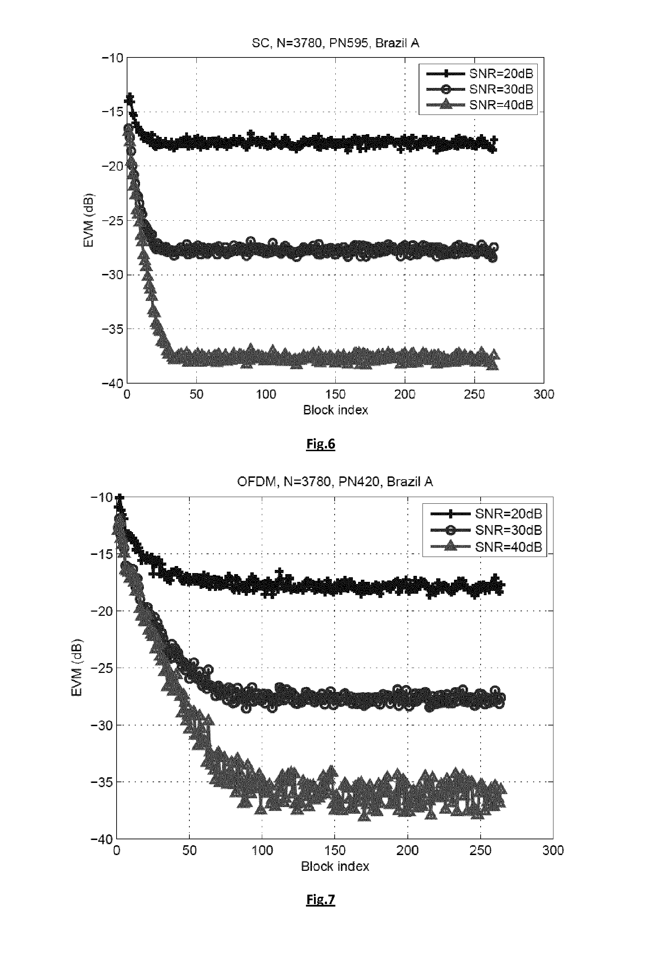

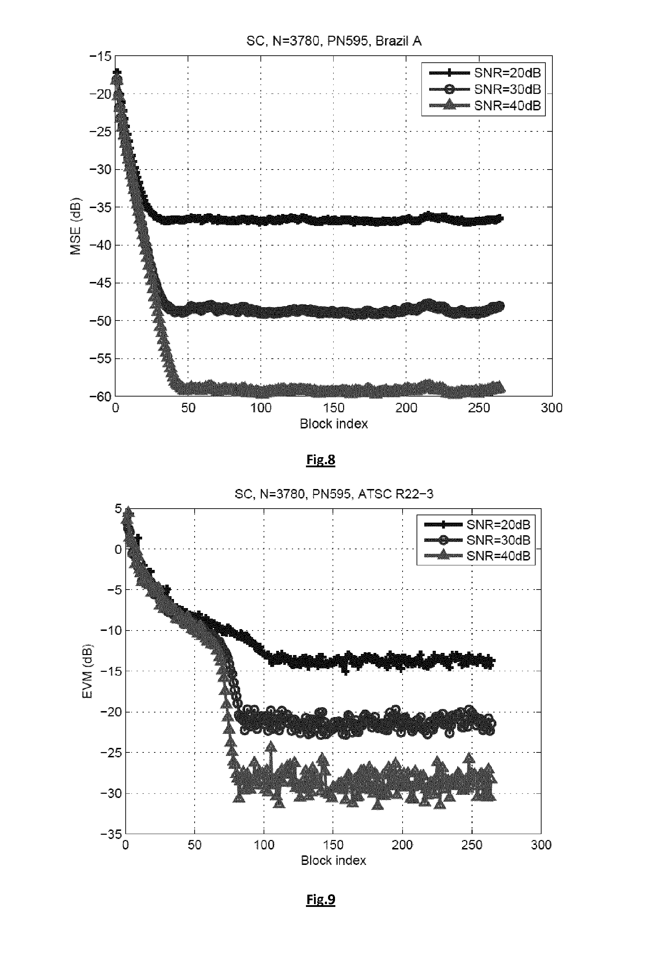

First, results are shown of both the SC and OFDM system in the Brazil- A channel (Table II) . The error vector magnitude (EVM) at the output of the equalizer is shown in Fig. 6 for SC with PN595 and Fig. 7 for OFDM with PN420. The EVM is measured on the equalized FH. SNR values of 20, 30 and 40 dB were simulated. The mean squared error (MSE) of the estimated channel is also shown in Fig. 8 for the SC case. The impressive performance of the adaptive equalizer is clearly visible: at the start of the adaptation, the MSE is limited to about- 15dB by the poor auto- correlation properties of the PN595 sequence. After less than 50 blocks (or frames), the MSE improves to- 37 to- 57dB according to the input SNR.

TABLE II

| PARAMETERS OF THE BRAZIL A CHANNEL | | | | | | |
|---|---|---|---|---|---|---|
| Param. | Path 1 | Path 2 | Path 3 | Path 4 | Path 5 | Path 6 |
| Att. (dB) | 0 | 1.38 | 16.2 | 14.9 | 13.6 | 16.4 |
| Delay ($\mu$s) | 0 | 0.15 | 2.22 | 3.05 | 5.86 | 5.93 |

TABLE III

| PARAMETERS OF THE ATSC R22 ENSEMBLE 3 CHANNEL | | | | | | |
|---|---|---|---|---|---|---|
| Param. | Path 1 | Path 2 | Path 3 | Path 4 | Path 5 | Path 6 |
| Att. (dB) | 0 | 3 | 1 | 1 | 3 | 9 |
| Delay ($\mu$s) | 0 | -1.8 | 0.15 | 1.8 | 5.7 | 39.8 |

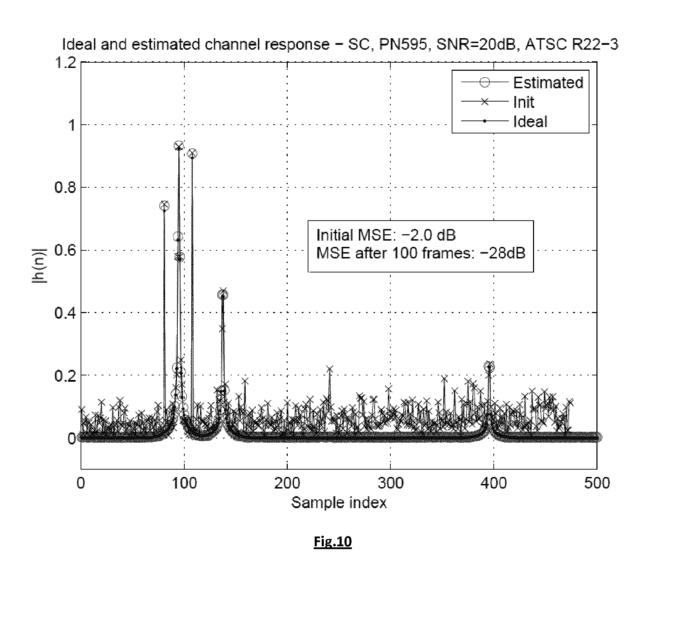

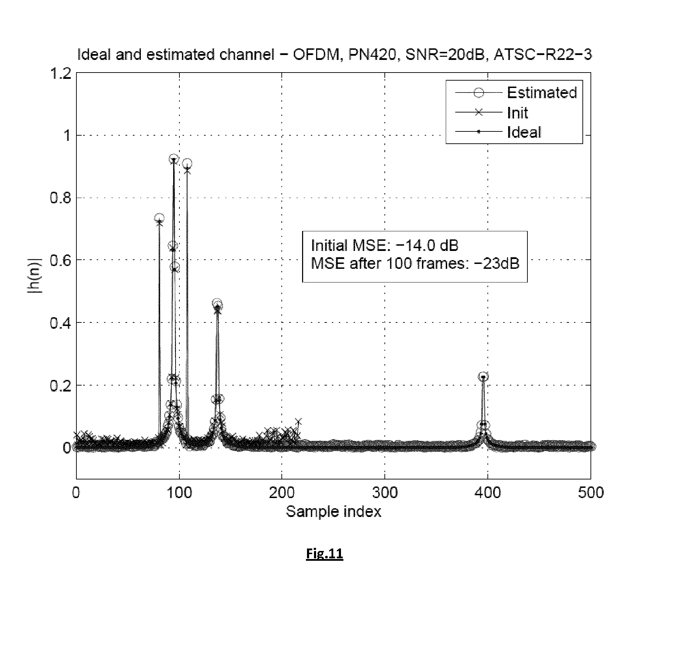

Next, in Fig. 9 the EVM performance is shown of SC with PN595 under the ATSC R22 Ensemble 3 channel (Table III) . This is one of the harshest channels discussed in the Digital TV literature because it has a strong echo after $40\mu$s. Fig. 10 shows the ideal channel response together with the initial channel estimation and the channel estimation after adaptation for an SNR of 20dB. The adaptive equalizer brings the initial MSE from- 2dB to- 28dB. The same plot is provided in Fig. 11 for the OFDM case with PN420. In this case, the initial MSE is better because of the better autocorrelation properties of the PN420 but the late echo is not at all estimated initially. Still, the adaptive equalizer is able to correctly estimate this late echo.

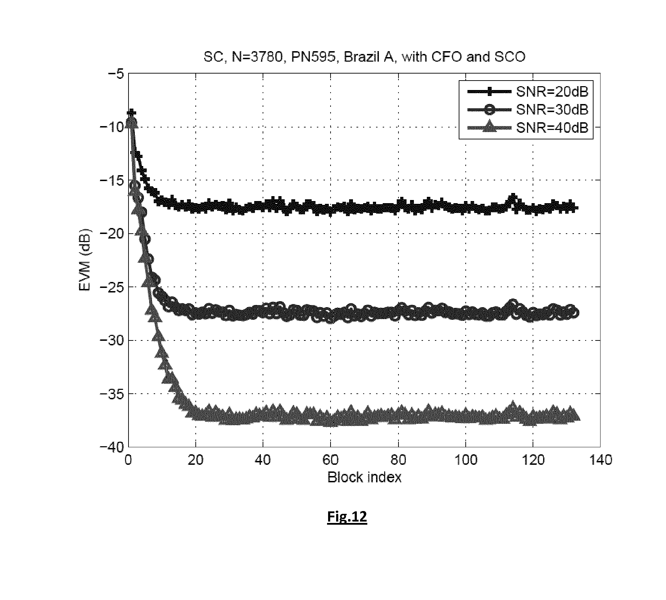

Finally, Fig. 12 shows the EVM performance of SC with PN595 in presence of CFO and SCO of 0.1 ppm. Compared to Fig. 6, there is hardly any visible EVM degradation, which shows the ability of the loop to track CFO and SCO.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Circuit for frequency domain equalization of a received block (10) of symbols, said received block comprising a header with known symbols and a body, said circuit comprising

   - a filtering section (1) arranged for equalizing a frequency domain representation of said received block based on an estimated channel frequency response and arranged for converting the equalized received block to the time domain, said equalized received block comprising an equalized header with known symbols and an equalized body,
   - a slicer (2) arranged for slicing a block of symbols corresponding to said equalized body and for outputting a block of sliced symbols,
   - an updating section (3) comprising means for determining a header error indicative of the difference (11) between said header with known signals and said equalized header, means for determining a body error indicative of the difference (12) between said symbols at the slicer input and said sliced symbols at the slicer output, and means for computing an updated estimated channel frequency response with a frequency domain error signal (13) derived from said header error and said body error.

2. Circuit for frequency domain equalization as in claim 1, further comprising conversion means (4,5) for converting said time-domain converted equalized body to the frequency domain, thereby obtaining said block of symbols at the input of said slicer and for converting said body error.

3. Circuit for frequency domain equalization as in claim 1 or 2, wherein said updating section is arranged for performing equalization according to a recursive least-squares algorithm.

4. Circuit for frequency domain equalization as in any of claims 1 to 3, wherein said header with known symbols is a Pseudo-Noise, PN, sequence.

5. Circuit for frequency domain equalization as in claim 4, arranged for performing an initial channel estimation based on correlating a received PN sequence with a known transmitted PN sequence.

6. Circuit for frequency domain equalization as in any of the previous claims, wherein said received block of symbols comprises an Orthogonal Frequency Division Multiplexing signal or wherein said received block of symbols is a single-carrier modulated block.

7. Receiver structure comprising a circuit for frequency domain equalization as in any of the previous claims.

8. Receiver structure as in claim 7, further comprising a circuit (6) for cancelling a rotation applied to a PN sequence in said header at the transmitter side.

9. Receiver structure as in claim 8, wherein said circuit (7) for cancelling said rotation is arranged for taking into account said channel estimation.

10. Receiver structure as in any of claims 7 to 9, further comprising a tracking circuit adapted for compensating unwanted signal rotation, said tracking circuit arranged for being fed with said equalized header.

11. Receiver structure as in any of claims 7 to 10, adapted for operating according to the digital television terrestrial broadcasting system standard GB20600-2006.

(a)

(b)

**Fig.1**

**Fig.2**

**Fig.3**

**Fig.4**

**Fig.5**

SC, N=3780, PN595, Brazil A

**Fig.6**

OFDM, N=3780, PN420, Brazil A

**Fig.7**

**Fig.8**

**Fig.9**

Ideal and estimated channel response - SC, PN595, SNR=20dB, ATSC R22-3

**Fig.10**

**Fig.11**

SC, N=3780, PN595, Brazil A, with CFO and SCO

**Fig.12**

Europäisches
Patentamt
European
Patent Office
Office européen
des brevets

**EUROPEAN SEARCH REPORT**

Application Number

EP 12 16 2389

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2002/037058 A1 (BIRRU DAGNACHEW [US]) 28 March 2002 (2002-03-28)<br>* figure 2 *<br>* paragraph [0010] *<br>* paragraphs [0024], [0025] *<br>* paragraphs [0038] - [0042] *<br>* paragraph [0054] *<br>* claim 1 *<br>----- | 1-3,6,7, 11<br>4,5,8-10 | INV.<br>H04L25/03 |
| Y | US 2006/205437 A1 (SUNG SANG-HOON [KR] ET AL) 14 September 2006 (2006-09-14)<br>* paragraphs [0013] - [0021] *<br>* paragraphs [0049] - [0052] *<br>----- | 4,5,8,9 | |
| Y | US 2005/058193 A1 (SAED ARYAN [CA]) 17 March 2005 (2005-03-17)<br>* abstract *<br>* paragraph [0018] *<br>* page 34 *<br>----- | 10 | |
| A | US 2010/074320 A1 (PARK SUNG-IK [KR] ET AL) 25 March 2010 (2010-03-25)<br>* abstract *<br>----- | 1-11 | **TECHNICAL FIELDS SEARCHED (IPC)**<br><br>H04L |

The present search report has been drawn up for all claims

| Place of search | Date of completion of the search | Examiner |
|---|---|---|
| Munich | 12 September 2012 | Bonnet, Jérôme T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 16 2389

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2012

| Patent document cited in search report | | | Publication date | Patent family member(s) | | | Publication date |
|---|---|---|---|---|---|---|---|
| US 2002037058 | A1 | | 28-03-2002 | CN | 1401176 | A | 05-03-2003 |
| | | | | EP | 1236324 | A2 | 04-09-2002 |
| | | | | JP | 2004503180 | A | 29-01-2004 |
| | | | | US | 2002037058 | A1 | 28-03-2002 |
| | | | | WO | 0205505 | A2 | 17-01-2002 |
| US 2006205437 | A1 | | 14-09-2006 | KR | 20060097960 | A | 18-09-2006 |
| | | | | US | 2006205437 | A1 | 14-09-2006 |
| US 2005058193 | A1 | | 17-03-2005 | AT | 503327 | T | 15-04-2011 |
| | | | | CN | 101048955 | A | 03-10-2007 |
| | | | | EP | 1665698 | A1 | 07-06-2006 |
| | | | | JP | 4495159 | B2 | 30-06-2010 |
| | | | | JP | 2007505524 | A | 08-03-2007 |
| | | | | KR | 20070008509 | A | 17-01-2007 |
| | | | | US | 2005058193 | A1 | 17-03-2005 |
| | | | | US | 2008219340 | A1 | 11-09-2008 |
| | | | | WO | 2005027384 | A1 | 24-03-2005 |
| US 2010074320 | A1 | | 25-03-2010 | KR | 20070045417 | A | 02-05-2007 |
| | | | | US | 2010074320 | A1 | 25-03-2010 |
| | | | | WO | 2007049841 | A1 | 03-05-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 206002006 A

**Non-patent literature cited in the description**

- **L. GUI et al.** Low Complexity Channel Estimation Method for TDS-OFDM Based Chinese DTTB System. *IEEE Trans. Cons. Electr.,* August 2009, vol. 55 (3), 1135-1140